# EUROPÄISCHE PATENTSCHRIFT

(11) **EP 0 758 110 B1**
(45) Veröffentlichungstag und Bekanntmachung des Hinweises auf die Patenterteilung: **20.01.1999**
(21) Anmeldenummer: 96112433.6
(22) Anmeldetag: 01.08.1996
(51) Int. Cl.: G06F 1/16

(54) **EDV-System-Koffer**
Carrying case for EDP system
Mallette de transport pour système informatique

(30) Priorität: 09.08.1995 DE 29512818 U
(43) Veröffentlichungstag der Anmeldung: 12.02.1997
(73) Patentinhaber: PARAT-WERK SCHÖNENBACH GmbH + Co KG, D-42897 Remscheid (DE)
(72) Erfinder: Schönenbach, Heinz, 42897 Remscheid-Lennep (DE)
(74) Vertreter: Patentanwälte Ostriga & Sonnet

(56) Entgegenhaltungen:
- DE-U- 9 105 721
- DE-U-29 502 538
- US-A- 4 929 948

## Beschreibung

Die Erfindung bezieht sich auf ein Tragebehältnis für zumindest einen tragbaren Computer und einen Drucker, mit einem Abteil zur Aufnahme eines Formteils, welches wenigstens als Tragkörper für Computer und Drucker dient, wobei mit dem Formteil ein besonderer Druckerträger derart beweglich verbunden ist, daß der Druckerträger von einer Ruhe- oder Transportstellung auf dem Formteil in eine Arbeitsposition verlagerbar ist, in der der Drucker sowohl mit Bodenfreiheit als auch mit Abstand zu dem auf dem Formteil befindlichen Computer derart bereitgestellt ist, daß Papierzufuhr bzw. -auswurf bezüglich des Druckers von bzw. nach vorn möglich ist.

Tragbare Computer, insbesondere sog. 'Notebooks' zeichnen sich vor allem durch ihre mobile Verwendbarkeit aus, woraus sich der Wunsch ableitet, geeignete Tragebehältnisse für den Computer, den zugehörigen Drucker und die zu ihrem Betrieb erforderlichen Zubehörteile verfügbar zu haben.

Bekannt ist ein zweischaliger Koffer, in dessen Bodenschale mittels eines schalenartigen Formteils Aufnahmen gebildet sind zur verdeckten Unterbringung der Stromversorgung, der Kabel und verschiedener Zusatzgeräte. Die Außenseite des Formteils dient der Auflage von Computer und Drucker, die jeweils mittels Klettbandelementen daran festgehalten sind. Computer und Drucker sind bereits untereinander verkabelt platzsparend hintereinander angeordnet. Die Kabel wie auch das Netzteil finden unsichtbar unter der in die Koffer-Bodenschale eingesetzten Formschale Platz. Die Deckelschale des Koffers dient dem Schutz der wertvollen Einrichtung beim Transport, weist in der Regel aber auch noch Staufächer auf, etwa für Druckerpapier, Disketten od. dgl.

Die Handhabung des Koffers vollzieht sich so, daß sein Deckelteil vom Bodenteil abgenommen und dieser dann mit den in ihm aufgenommenen Gerätschaften auf den Arbeitstisch gelegt wird, so daß sofort mit Computer und Drucker gearbeitet werden kann, nachdem mittels eines Stromkabels der Netzanschluß hergestellt ist.

Diesem Gebrauchsvorteil steht der Nachteil gegenüber, daß praktisch nur Drucker verwendet werden können, bei denen sowohl die Papierzufuhr als auch der Papierauswurf von bzw. nach oben erfolgt. Allen anderen möglichen Papiertransportarten steht die Einrichtung selbst im Weg.

Nun kann man zwar den Drucker von seiner Halterung mittels Klettverschlußelementen auf dem Formteil abziehen und innerhalb der Kabelreichweite an anderer Stelle plazieren. Das ist aber einerseits mit nachteiligen Handreichungen verbunden, anderseits könnten zusätzlich nur solche Druckertypen verwendet werden, bei denen die Papierzufuhr oder der Papierauswurf von vorn bzw. nach vorn erfolgt.

Die Erfindung geht aus von dem Dokument DE-U-29502538. Daraus ist ein Tragebehältnis bekannt für zumindest einen tragbaren Computer und einen Drucker, mit einem Abteil zur Aufnahme eines Formteils, welches wenigstens als Tragkörper für Computer und Drucker dient, wobei mit dem Formteil ein besonderer Druckerträger derart beweglich verbunden ist, daß der Druckerträger von einer Ruhe- oder Transportstellung (Fig. 1) auf dem Formteil in eine Arbeitsposition (Fig. 2, 3) verlagerbar ist, in der der Drucker sowohl mit Bodenfreiheit als auch mit Abstand zu dem auf dem Formteil befindlichen Computer derart bereitgestellt ist, daß Papierzufuhr bzw. -auswurf bezüglich des Druckers von bzw. nach vorn möglich ist.

Drucker und Computer sind hier unmittelbar nebeneinander angeordnet, wobei der Drucker um eine im wesentlichen vertikale Achse aus einer Ruheposition in eine Arbeitsposition schwenkbar ist. Um Zugang zu den auf der dem Drucker zugewandten Seite des Computers angeordneten Vorrichtungen, wie Diskettenlaufwerk, Modem, Schlösser oder ähnlichem, zu erlangen, muß der Drucker aus seiner Ruhe- in die Arbeitsposition verschwenkt werden.

Aufgabe der Erfindung ist es, ein Tragebehältnis für EDV-Systeme der vorausgesetzten Art verfügbar zu machen, welches in ebenso geschickter wie einfacher Weise so gestaltet ist, daß alle gängigen Druckertypen verwendbar und die erforderlichen Handreichungen bei deren Gebrauch minimiert und optimiert sind.

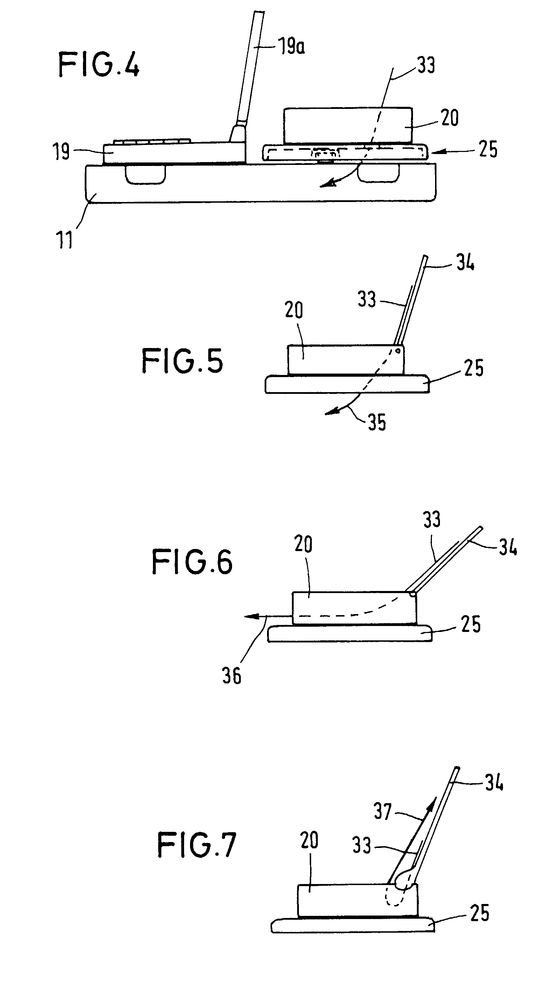

Die Erfindung löst diese Aufgabe mit den Mitteln des Anspruchs 1 und ist demgemäß dadurch gekennzeichnet, daß der Druckerträger aus einer hinter dem Computer befindlichen Ruhe- bzw. Transportposition in eine Arbeitsposition neben dem Computer verschiebbar ist und daß in der Arbeitsposition des Druckers Papierzufuhr bzw. -auswurf bezüglich des Druckers auch von bzw. nach unten (Fig. 5) unbehindert möglich ist.

Im Unterschied zum Stand der Technik muß der Druckerträger nicht aus seiner Ruhe- in die Arbeitsposition verschoben werden, um Zugang zu den seitlich am Computer angeordneten Vorrichtungen zu erlangen. Dies muß nur dann geschehen, wenn Ausdrucke erstellt werden sollen und zugleich während des Ausdruckvorganges der Drucker komfortabel zugänglich sein muß. Wird am Computer gearbeitet, ohne daß ein beaufsichtigter Druckvorgang beabsichtigt ist, kann der Drucker in seiner Ruheposition bleiben, wobei der Computer von vorne und von seinen beiden Seiten her frei zugänglich ist. In dieser Stellung ist darüberhinaus der Zugang zur Tastatur verglichen mit der Situation bei einem in Ruhestellung befindlichen Drucker gemäß dem Stand der Technik wesentlich erleichtert.

Der Drucker verbleibt nur dann in der Transportposition hinter dem Computer, wenn dort sein Betrieb ohne weiteres möglich ist. Anderenfalls wird er, was nur eines Handgriffs bedarf, durch Verschieben seines Trägers in die günstigste Arbeitsposition bewegt, in der jeder beliebige Drucker unabhängig vom jeweiligen Papierzufuhr- oder -auswurfschema betriebsfähig ist. Dabei wird der Drucker aufgrund der solchen Verlagerung zugleich auch aus dem abgedeckten Bereich hinter dem Computer herausbewegt, so daß sich aus der natürlichen Arbeitshaltung am Computer der Drucker besser beobachten und auch handhaben läßt.

Eine besonders einfache Lösung besteht darin, daß der Druckerträger mittels einer Teleskopschienenanordnung geradlinig hinter dem Computer weg zur Seite ausschiebbar ist und zwar in Höhe der Transportposition, jedoch in einen Bereich außerhalb des Behältnisumrisses. Damit steht automatisch unter dem Drucker soviel Bodenfreiheit zur Verfügung, daß unterseitiges Papiermanagement ohne weiteres möglich ist. Da das Verschieben des Druckers ihn gleichzeitig neben den Computer bringt, ist auch ein Papiermanagement vor der Druckerfront problemlos beherrschbar, ohne den Drucker aus seiner Befestigung am Druckerträger lösen zu müssen.

Die Erfindung versteht sich am besten aus ihrer nachfolgenden Beschreibung anhand eines in den Zeichnungen dargestellten Ausführungsbeispiels. Darin zeigen:

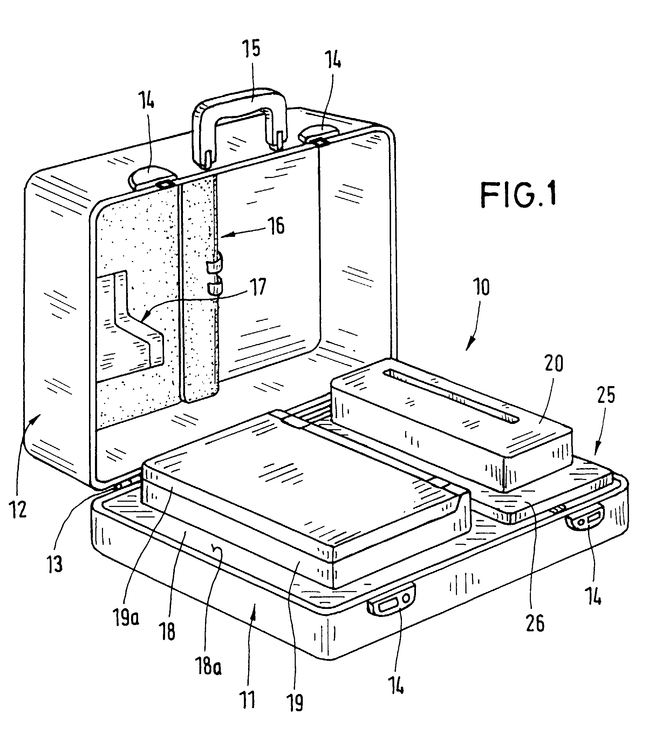

- Fig. 1: eine schaubildliche Ansicht des geöffneten Tragebehältnisses,

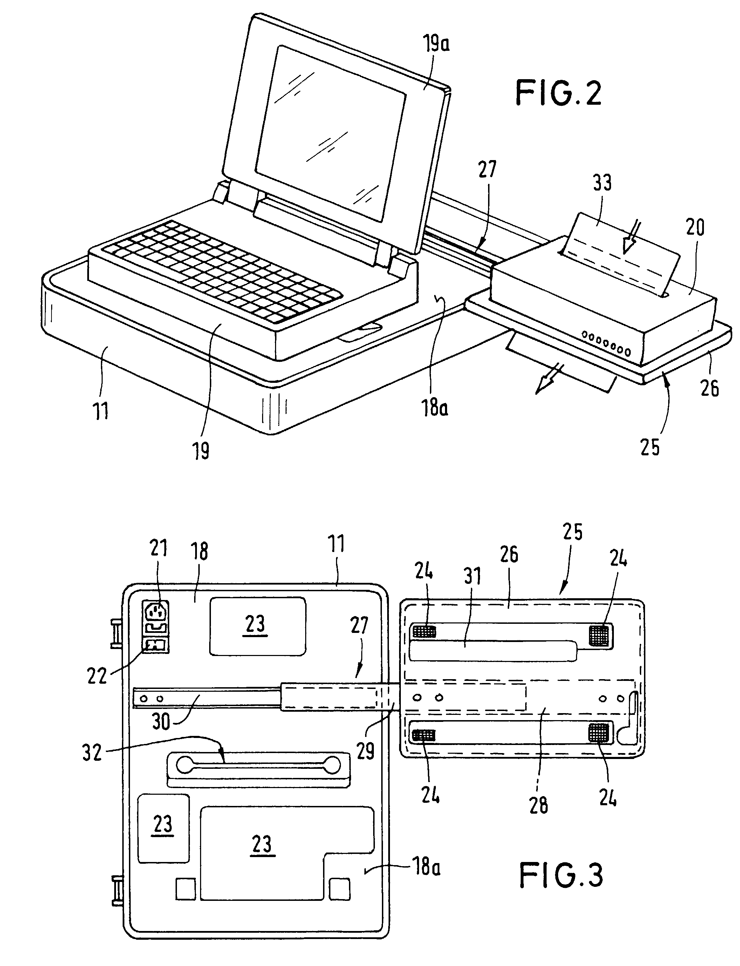

- Fig. 2: eine Ansicht der Unterschale des Tragebehältnisses in Arbeitsposition von Computer und Drucker,
- Fig. 3: einen Aufsicht auf die betriebsfertige Anordnung der Fig. 2,
- Fig. 4: eine Seitenansicht zu Fig. 2 und Fig. 3, sowie
- Fig. 5 bis 7: Prinzipdarstellungen von Druckern mit unterschiedlichem Papiermanagement.

Das in Fig. 1 beispielhaft dargestellte und in seiner Gesamtheit mit 10 bezeichnete Tragebehältnis ist nach Art eines zweiteiligen Schalenkoffers mit Unterschale 11 und Oberschale 12 gestaltet.

Unterschale 11 und Oberschale 12 sind mittels aushängbarer Scharniere 13 schwenkbar miteinander verbunden und im geschlossenen Transportzustand des Koffers 10 mit Hilfe von Schlössern 14 aneinander arretierbar. An einem Griff 15 kann der Koffer 10 getragen werden. Im Hohlraum der Oberschale 12 befinden sich Einsteckfächer 16 für Papier, Broschüren od.dgl. sowie 17 für Disketten, Visitenkarten u.a.m.

In die Bodenschale 11 ist ein Formteil 18 eingesetzt, bei dem es sich bei der praktischen Ausführung um ein schalenförmig tiefgezogenes ABS-Kunststoffteil handelt. Die in Fig. 1 sichtbare Außenfläche 8a dient als Träger für einen Computer 19 und einen Drucker 20, die, wie ersichtlich, hintereinander angeordnet sind und in dieser Lage bei auf einen Tisch aufgestelltem Kofferunterteil 11 grundsätzlich auch bedienbar sind.

Das Formteil 18, welches - siehe Fig. 3 - einige Ausnehmungen 23 aufweist, durch die Gefache zur Aufnahme von zusätzlichen Utensilien wie Netzteil, Kabel od.dgl. zugänglich sind, deckt den zwischen sich und dem Innenraum der Unterschale 11 gebildeten Raum ansonsten ab. Außerdem weist das Formteil 18 noch einen Kaltgerätestecker 21 sowie einen Netzschalter 22 auf.

Üblicherweise werden Computer 19 und Drucker 20 mit Hilfe von Klettbandelementen (vgl. auch 24 in Fig. 3) am Formteil 18 abnehmbar befestigt. Eine derartige Halterung ist sicher genug, um die Geräte im geschlossenen Koffer 10 bedenkenlos transportieren zu können, zumal dann, wenn auf der Innenseite der Oberschale 12 Schaumstoffpolster oder ähnliche Schutzelemente angebracht sind, die Computer 19 und Drucker 20 zusätzlich festhalten.

Beim Ausführungsbeispiel besteht die Besonderheit, daß der Drucker 20 nicht unmittelbar auf dem Formteil 18 befestigt ist, sondern, und zwar wiederum entfernbar mittels der genannten Klettbandelemente 24, von denen vier Bereiche in Fig. 3 ersichtlich sind, auf einem Druckerträger 25, der beim Ausführungsbeispiel als Druckertragplatte 26 ausgebildet ist.

Die Druckertragplatte 26 ist mit dem Formteil 18 über eine Teleskopschienenanordnung 27 verschieblich verbunden. Diese besteht aus drei Teleskopgliedern 28, 29 und 30, wobei des Teleskopglied 28 an der Unterseite der Druckertragplatte 26 befestigt ist und das Teleskopglied 30 fest auf der Oberseite 18a des Formteils 18. Eine Teleskopiermöglichkeit besteht jeweils zwischen den Teleskopgliedern 28 und 29 einerseits sowie zwischen den Teleskopgliedern 29 und 30 andererseits mit einer Gesamt-Teleskoplänge, die größer ist als die Länge eines einzelnen Teleskopgliedes. Die Teleskopglieder 28 bis 30 sind so zusammengehalten, daß sie sich nicht unwillentlich voneinander lösen können, also insbesondere nicht bei bestimmungsgemäßer Bewegung.

Auf diese Weise kann der Drucker 20 nun durch Verschieben der Druckertragplatte 26 aus der Ruhe- oder Transportposition entsprechend Fig. 1 hinter dem Computer 19 heraus bewegt werden derart, daß der Drucker 20 in seiner Betriebsposition (Fig. 2 und 3) außerhalb des Umrisses der Kofferschale 11 neben dieser und also auch seitlich neben dem Computer 19 positioniert ist. In beiden Stellungen befindet sich der Drucker 20 auf demselben Höhenniveau, so daß sich nach dem Ausfahren in die Betriebsposition nach den Fig. 2 und 3 automatisch eine hinreichende Bodenfreiheit für den Drucker 20 ergibt, die es möglich macht, Papier 33 beispielsweise von oben einzuführen und unterhalb des Druckers 20, also bodenseitig, auszuwerfen (Fig. 2 bzw. 4 und 5). Zum Papierdurchtritt weist die Druckertragplatte 26 einen Papierdurchtrittsspalt 31 auf.

Der Drucker 20 kann ständig über ein nicht dargestelltes Druckerkabel mit dem Computer 19 verbunden bleiben. Auch kann das Druckernetzkabel dauernd am Drucker 20 angeschlossen bleiben. Die Kabel können etwa aus der oberen Öffnung 23 des Formteils 18 und/oder aus einer besonderen, mit 32 bezeichneten Druckerkabelführung herausgezogen bzw. dort auch wieder ohne weiteres eingelegt werden, wenn der Drucker 20 aus seiner Betriebsposition nach den Fig. 2 und 3 in die Transportposition nach Fig. 1 zurückgeschoben wird.

Die Erfindung ermöglicht die Verwendung jedes für mobile Verwendung gängigen Druckertyps, und zwar unabhängig von dessen Papiermanagement. Dies ist in den Fig. 5 bis 7 schematisch angedeutet. Entsprechend Fig. 5 erfolgt die Zufuhr eines Papierblatts 33 entlang einer aufstellbaren Papierstütze 34 am Drucker 20 von oben, und der Blattauswurf entsprechend dem angedeuteten Pfeil 35 nach unten. Fig. 6 zeigt eine ähnliche Papierzufuhr, jedoch einen Blattauswurf bezüglich des Druckers 20 nach vorn in Richtung des Pfeiles 36. Fig. 7 deutet ein Papiermanagement an, bei dem das Blatt 33 entgegen seiner Zufuhrrichtung nach oben ausgeworfen wird (Pfeil 37). Allein Drucker 20 mit einer solchen Papierführung konnten bislang bei einer nicht ohne weiteres ortsveränderbaren Anordnung des Druckers 20 hinter einem Computer 19 entsprechend Fig. 1 verwendet werden, die anderen nicht. Dies ist durch einfache Maßnahmen nach der Lehre der Erfindung nunmehr gelungen.

Ein wesentlicher Vorteil der neuen Anordnung besteht auch darin, daß der Drucker 20 in seiner Betriebslage (Fig. 2 und 3) seitlich neben dem Computer 19 nicht mehr von dessen aufgestellten Bildschirm 19a verdeckt wird, wodurch die Arbeit am bzw. mit dem Drucker zusätzlich vereinfacht wird. Gleichwohl bleibt der Drucker stets mit dem Druckerträger 25 und folglich auch mit der Unterschale 11 des Koffers gemeinsam transportabel verbunden.

## Patentansprüche

1. Tragebehältnis für zumindest einen tragbaren Computer (19) und einen Drucker (20), mit einem Abteil zur Aufnahme eines Formteils, welches wenigstens als Tragkörper für Computer (19) und Drucker (20) dient, wobei mit dem Formteil (18) ein besonderer Druckerträger (25) derart beweglich verbunden ist, daß der Druckerträger (25) von einer Ruhe- oder Transportstellung (Fig. 1) auf dem Formteil (18) in eine Arbeitsposition (Fig. 2, 3) verlagerbar ist, in der der Drucker (20) sowohl mit Bodenfreiheit als auch mit Abstand zu dem auf dem Formteil befindlichen Computer (19) derart bereitgestellt ist, daß Papierzufuhr bzw. -auswurf bezüglich des Druckers (20) von bzw. nach vorn möglich ist, dadurch gekennzeichnet, daß der Druckerträger (25) aus einer hinter dem Computer (19) befindlichen Ruhe- bzw. Transportposition in eine Arbeitsposition neben dem Computer (19) verschiebbar ist und daß in der Arbeitsposition des Druckers (20) Papierzufuhr bzw. -auswurf bezüglich des Druckers (20) auch von bzw. nach unten (Fig.5) unbehindert möglich ist.

2. Tragebehältnis nach Anspruch 1, gekennzeichnet durch eine Arbeitsposition des Druckerträgers (25) weitestgehend außerhalb des Umrisses des Tragebehältnis-Abteils (Unterschale 11).

3. Tragebehältnis nach Anspruch 1, gekennzeichnet durch eine Arbeitsposition des Druckerträgers (25) weitestgehend außerhalb des Umrisses des Tragebehältnis-Abteils (Unterschale 11), jedoch auf einem der Ruhe- bzw. Transportposition entsprechenden Höhenniveau des Formteils (18).

4. Tragebehältnis nach einem der Ansprüche 1 bis 3, dadurch gekennzeichnet, daß der Druckerträger (25) mit dem Formteil (18) über einen Teleskopauszug (27) verschieblich verbunden ist.

5. Tragebehältnis nach Anspruch 4, dadurch gekennzeichnet, daß der Teleskopauszug (27) als Mehrfachteleskop ausgeführt ist mit einem Hub, der größer ist als die Länge der einzelnen Teleskopglieder (28; 29; 30).

6. Tragebehältnis nach Anspruch 4 oder 5, dadurch gekennzeichnet, daß die Teleskopglieder (28; 29; 30) gegen unbeabsichtigte Trennung untereinander verriegelt sind.

7. Tragebehältnis Anspruch 1 oder einem der darauf folgenden, dadurch gekennzeichnet, daß der Druckerträger (25) als Tragplatte (26) ausgebildet ist und die Tragplatte (26) eine Papierdurchlaßöffnung (31) aufweist.

## Claims

1. Carrying case for at least one portable computer (19) and a printer (20), with a compartment for receiving a moulding which serves at least as a carrier body for computer (19) and printer (20), wherein a special printer support (25) is movably connected to the moulding (18) in such a way that the printer support (25) is capable of being shifted from a rest position or transport position (Fig. 1) on the moulding (18) into a working position (Figs. 2, 3) in which the printer (20) is made available both with ground clearance and with a spacing from the computer (19) located on the moulding in such a way that feed and ejection of paper with respect to the printer (20) are possible from the forward direction and in the forward direction, respectively, characterised in that the printer support (25) is capable of being displaced from a rest position or transport position located behind the computer (19) into a working position alongside the computer (19) and in that feed and ejection of paper with respect to the printer (20) are also possible in unimpeded manner from the downward direction and in the downward direction (Fig. 5), respectively, in the working position of the printer (20).

2. Carrying case according to Claim 1, characterised by a working position of the printer support (25) very largely outside the outline of the compartment of the carrying case (lower shell 11).

3. Carrying case according to Claim 1, characterised by a working position of the printer support (25) very largely outside the outline of the compartment of the carrying case (lower shell 11) but at a height level of the moulding (18) corresponding to the rest position or transport position.

4. Carrying case according to one of Claims 1 to 3, characterised in that the printer support (25) is displaceably connected to the moulding (18) via a telescopic extension (27).

5. Carrying case according to Claim 4, characterised in that the telescopic extension (27) is constructed as a multi-part telescope with a throw which is greater than the length of the individual telescope members (28; 29; 30).

6. Carrying case according to Claim 4 or 5, characterised in that the telescope members (28; 29; 30) are interlocked so as to resist unintentional separation.

7. Carrying case according to Claim 1 or one of the subsequent claims, characterised in that the printer support (25) takes the form of a bearing plate (26) and the bearing plate (26) has an opening (31) for the passage of paper.

## Revendications

1. Mallette de transport pour au moins un ordinateur portable (19) et une imprimante (20), avec un compartiment destiné à recevoir une pièce profilée, servant au moins de corps support pour un ordinateur (19) et une imprimante (20), où un support d'imprimante (25) particulier est relié de façon mobile à la pièce profilée (18), de manière que le support d'imprimante (25) soit déplaçable, d'une position de repos ou de transport (Fig. 1) sur la pièce profilée (18) en une position de travail (Fig. 2, 3), dans laquelle l'imprimante (20) est fournie tant avec une liberté au sol qu'également à une certaine distance de l'ordinateur (19) se trouvant sur la pièce profilée, de manière qu'une amenée, respectivement, une sortie de papier vers l'avant, respectivement vers l'arrière de l'imprimante (20) soit possible, caractérisée en ce que le support d'imprimante (25) est déplaçable, d'une position de repos respectivement de transport se trouvant derrière l'ordinateur (19), en une position de travail placée à côté de l'ordinateur (19), et en ce que, dans la position de travail de l'imprimante (20), l'amenée, respectivement, la sortie de papier par rapport à l'imprimante (20) est également possible sans entrave depuis, respectivement vers le bas (Fig. 5).

2. Mallette de transport selon la revendication 1, caractérisée par une position de travail du support d'imprimante (25) notablement aussi extérieure que possible au contour du compartiment de mallette de transport (coque inférieure 11).

3. Mallette de transport selon la revendication 1, caractérisée par une position de travail du support d'imprimante (25) notablement aussi extérieure que possible au contour du compartiment de mallette de transport (coque inférieure 11), cependant sur un niveau en hauteur, correspondant à la position de repos respectivement de transport, de la pièce profilée (18).

4. Mallette de transport selon l'une des revendications 1 à 3, caractérisée en ce que le support d'imprimante (25) est relié de façon déplaçable à la pièce profilée (18) par l'intermédiaire d'un tiroir télescopique (27).

5. Mallette de transport selon la revendication 4, caractérisée en ce que le tiroir télescopique (27) est réalisé sous la forme de dispositif télescopique multiple avec une course supérieure à la longueur des différents organes télescopiques (28; 29; 30).

6. Mallette de transport selon la revendication 4 ou 5, caractérisée en ce que les organes télescopiques (28; 29; 30) sont verrouillés les uns par rapport aux autres pour empêcher toute séparation intempestive.

7. Mallette de transport selon la revendication 1 ou l'une des revendications suivantes, caractérisée en ce que le support d'imprimante (25) est réalisé sous la forme de plaque support (26), et la plaque support (26) présente une ouverture de passage de papier (31).
